**Europäisches Patentamt**

**European Patent Office**

**Office européen des brevets**

(11) Veröffentlichungsnummer: **0 176 968**

**A1**

# (12) EUROPÄISCHE PATENTANMELDUNG

(21) Anmeldenummer: 85112231.7

(22) Anmeldetag: 26.09.85

(51) Int. Cl.⁴: **F 16 B 25/00**

(30) Priorität: 05.10.84 DE 3436466

(43) Veröffentlichungstag der Anmeldung:
09.04.86 Patentblatt 86/15

(84) Benannte Vertragsstaaten:
AT BE CH DE FR GB IT LI LU NL SE

(71) Anmelder: EJOT Baubefestigungen GmbH
Postfach 1265
D-5928 Bad Laasphe(DE)

(72) Erfinder: Kniese, Arnd, Dipl.-Ing.
Vor dem Fang 28
D-5928 Bad Laaspne(DE)

(72) Erfinder: Riecke, Ernst Hermann, Dipl.-Ing.
Ostpreussenstrasse 5
D-5920 Bad Berleburg(DE)

(74) Vertreter: Patentanwälte Dipl.-Ing. R. Schlee Dipl.-Ing. A. Missling
Bismarckstrasse 43
D-6300 Giessen(DE)

(54) Schraube.

(57) Die Schraube (S₃) hat einen Kern (1) aus Metall und einen Mantel (2) aus Kunststoff. Aus dem Mantel (2) ragt der Kern (1) nur mit einem Einschraubbereich (8) heraus. Der Mantel (2) begrenzt mit einer unteren Schulter (9) die Einschraubtiefe der Schraube (S₃), wodurch Deformationen von zu befestigenden wärmeisolierenden Platten (27) vermieden werden. Ein Armierungsring (15) verhindert das Einschneiden eines oberen Deckbleches (28) der Platte (27) in den Mantel (2).

Der Mantel (2) verhindert eine unerwünscht starke Abkühlung der Schraubenbereiche (10, 12), die an der Außenseite der Platte (27) liegen.

./...

FIG.4

**0176968**

EJOT Baubefestigungen GmbH, D-5928 Bad Laasphe

Schraube

Die Erfindung bezieht sich auf eine Schraube für die Befestigung von wärmeisolierenden Bauplatten an einer Unterkonstruktion, mit einem Schraubenschaft und einem Schraubenkopf.

Bei der Befestigung von wärmeisolierenden Bauplatten, wie sie z.B. beim Bau von Kühlhäusern verwendet werden, sollen wärmeleitende Brücken zwischen der Unterkonstruktion und der Außenseite der Bauplatten vermieden werden, um den Niederschlag von flüssigem oder gefrierendem Kondenswasser zu vermeiden. Um dies zu erreichen, wurden bereits Befestigungskonstruktionen angewendet, die eine Hülse aus Kunststoff aufweisen, die die Bauplatte durchgreift und mit einem äußeren Flansch an dieser anliegt. Ein Boden in der Hülse liegt an der Unterkonstruktion an und wird von einer metallischen Befestigungsschraube durchgriffen, die in die Unterkonstruktion eingeschraubt ist. Die Hülse ist mit wärmedämmendem Material ausgefüllt und mit einer Kappe abgedeckt. Eine solche Befestigungskonstruktion ist aufwendig. Das Eindrehen der tief in der Hülse versenkten Befestigungsschraube ist problematisch. Bequemer ist das Eindrehen von die Platte durchgreifenden Schrauben. Hierfür wurden bisher Metallschrauben verwendet, die eine wärmeleitende Brücke bilden.

Der Erfindung liegt die Aufgabe zugrunde, eine Schraube der eingangs genannten Art so auszubilden, daß sie eine wärmeisolierende Bauplatte über ihre gesamte Dicke durchgreifen kann, ohne eine wärmeleitende Brücke zur Außenseite der Bauplatte hin zu bilden.

Die zur Lösung dieser Aufgabe geschaffene Schraube ist gekennzeichnet durch einen Kern aus Metall, insbesondere aus Stahl und einen Mantel aus Kunststoff, wobei sich der Kern über die gesamte Länge der Schraube erstreckt und der Mantel den Schraubenkopf und den Schraubenschaft bis zum Beginn eines vorderen Einschraubbereiches hin bedeckt, der frei von einem Kunststoffüberzug ist.

Eine so ausgebildete Schraube wird in gleicher Weise verarbeitet wie eine die Bauplatte durchgreifende Metallschraube.Die Außenseite der Schraube jedoch kann nur geringfügig abgekühlt werden, da der Mantel ein sehr schlechter Wärmeleiter ist, so daß die an der Außenseite der Platte liegenden Schrauben-Außenflächen keine so niedrige Temperatur erreichen können, daß Umgebungsfeuchtigkeit an den Schrauben kondensieren kann. Durch die Erfindung wird die Verarbeitungsbequemlichkeit von durchgehenden Schrauben vereinigt mit dem Vorteil von versenkt in einer Hülse angeordneten Befestigungsschrauben.

Die Dicke des Mantels soll relativ groß sein. Geeignete relative und absolute Abmessungen hierfür sind im Anspruch 2 angegeben. Besonders gut ist thermoplastischer Kunststoff für die Herstellung des Schraubenmantels geeignet, z.B. Polyamid. Dieses Material kann durch Umspritzen des Kernes auf diesen aufgebracht werden.

Vorzugsweise wird der den Schraubenschaft umgebende Mantelbereich zugleich als Distanzhülse benutzt (Anspruch 4).
Man vermeidet dadurch ein zu tiefes Einschrauben der Schraube in die Unterkonstruktion und damit eine Deformation der wärmeisolierenden Platte. Der Einschraubbereich ist vorzugsweise nur so lang, wie dies mit Rücksicht auf einen sicheren Halt der Schraube in der Unterkonstruktion erforderlich ist (Anspruch 5). Größere Längen der Einschraubbereiches können sich daraus ergeben, daß für die Verarbeitung verschieden dicker wärmeisolierender Platten Schrauben verwendet werden, die gleichlange Kerne enthalten, wobei lediglich die Länge des Mantels entsprechend der Plattendicke gewählt ist.

Gemäß einer Weiterbildung der Erfindung ist die Schraube unterhalb des Kopfes mit einem Armierungsring versehen (Ansprüche 6 bis 8). Durch einen solchen Armierungsring wird verhindert, daß eine metallische Deckplatte, z.B. ein Aluminiumblech, der wärmeisolierenden Platte in den Mantel einschneidet.

Der Kern kann einen Kopf aufweisen (Anspruch 10). Es kann sich also beim Kern um eine normale Schraube handeln, die auch ohne Mantel verarbeitet werden könnte. Die Verwendung solcher Schrauben für den Kern verbilligt die Fertigung, da keine Spezialkerne gefertigt werden müssen. Unter die Erfindung fallen jedoch auch Konstruktionen, bei denen der Kern aus einer Schraube besteht, die ohne einen Kunststoffüberzug im Kopfbereich nicht brauchbar wäre.

Unterhalb des Kopfes des Kernes kann eine vom Mantel umhüllte Unterlegscheibe aus Metall angeordnet sein (Anspruch 11). Dadurch wird der Kopf vergrößert, was eine Verbesserung der Haltefunktion mit sich bringt, da ein großer Schraubenkopf das Durchziehen desselben durch die Platte erschwert. Unterhalb des Schraubenkopfes kann eine Dichtungsscheibe angeordnet sein (Anspruch 12), wodurch das Durchgriffsloch in der wärmeisolierenden Platte besonders gut abgedichtet wird. Häufig genügt jedoch auch die direkte Anlage des Schraubenkopfes an der wärmeisolierenden Platte für eine ausreichende Abdichtung.

In der Zeichnung sind Ausführungsbeispiele der Erfindung dargestellt. Es zeigen:

Fig. 1 eine Seitenansicht einer Schraube gemäß einer ersten Ausführungsform der Erfindung,

Fig. 2 einen diametralen Schnitt durch die Schraube nach Fig. 1, wobei jedoch der Kern nicht geschnitten ist,

Fig. 3 eine der Fig. 2 entsprechende Darstellung bei einer anderen Ausführungsform der Schraube und

Fig. 4 einen Schnitt durch eine Konstruktion, in der eine Schraube gemäß der Erfindung verwendet ist.

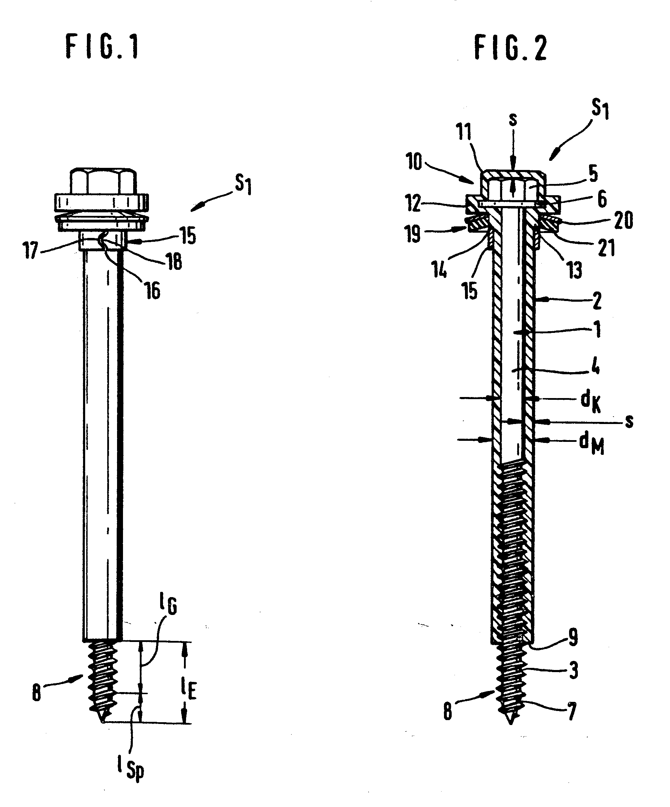

Die Schraube $S_1$ nach den Fig. 1 und 2 hat einen Kern 1 und einen Mantel 2. Der Kern 1 besteht aus Metall, vorzugsweise aus Stahl und der Mantel 2 aus thermoplastischem Kunststoff, der durch Umspritzen des Kernes 1 aufgebracht wurde.

Der Kern 1 hat einen vorderen Gewindeteil 3, einen nach hinten daran anschließenden glatten Schaftteil 4 und einen Kopf 5, der als Sechskant ausgebildet ist, und an den ein Flansch 6 angepreßt ist. Das Gewinde 7 des Gewindeteiles ist vorzugsweise selbstfurchend, d.h. es kann in ein vorgebohrtes Loch Gewindegänge eindrücken.

Der Mantel 2 umhüllt den Kern 1, abgesehen von einem relativ kurzen Einschraubbereich 8, vollständig, d.h. sowohl der Kopf 5 samt seinem Flansch 6, als auch der glatte Schaftteil 4, als auch ein Teil des Gewindeteiles 3 der Schraube sind von einem geschlossenen Mantel umhüllt. Der Durchmesser $d_K$ des Kernes

0176968

kann z.B. 6 mm und der Durchmesser $d_M$ des Mantels 2 im Bereich unterhalb des Kopfes, z.B. 10 mm, betragen. Die Dicke s des Mantels beträgt dann ca. 2 mm. Eine solche Manteldicke hat sich als zweckmäßig und ausreichend erwiesen.

Die Länge $l_E$ des Einschraubbereiches 8 ist mindestens gleich der Länge $l_{Sp}$ zuzüglich einer Länge $l_G$, wobei $l_{Sp}$ die Länge der Schraubenspitze und $l_G$ eine Länge ist, die mindestens gleich dem Außendurchmesser des Gewindes entspricht. Bei der gezeichneten Schraube ist die Länge $l_G$ wesentlich größer als der einfache Außendurchmesser der Schraube.

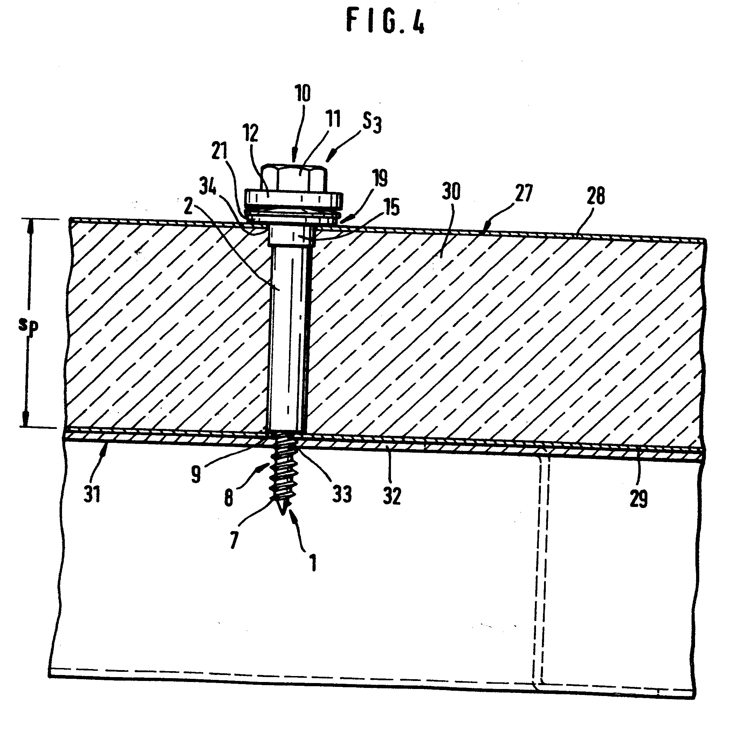

Der Mantel 2 endet an seinem unteren Ende mit einer Schulter 9, durch die die Einschraubtiefe der Schraube begrenzt wird, was anhand der Fig. 4 noch näher erläutert werden wird.

Auch im Bereich des Kopfes 5 des Schraubenkernes 1 ist die Dicke des Mantels etwa gleich wie im Bereich des Schaftes 4, also z.B. ca. 2 mm. Im Kopfbereich 10 hat die Schraube auch an ihrem Mantel eine sechskantige Außenfläche 11. Unterhalb dieser Fläche befindet sich ein Flansch 12, der durch den Flansch 6 des Kernes verstärkt ist.

Unterhalb des Flansches 12 befindet sich ein kurzer Mantelabschnitt 13, der dicker ist als der danach nach unten folgende Mantelbereich und der eine Schulter 14 bildet, an der ein Metallring 15 anliegt. Der Metallring 15 ist, wie Fig.1 zeigt, geschlitzt. Der Schlitz 16 ist derart gekrümmt, daß eine Verzahnung entsteht, nämlich eine Vertiefung 17, in die ein Vorsprung 18 eingreift.

Unter dem Flansch 12 ist eine Dichtscheibe 19 angeordnet. Die Dichtscheibe 19 besteht aus einer gewölbten Metallscheibe 20 und einem elastischen Belag 21, der z.B. aus Gummi bestehen kann, der durch Vulkanisieren oder Kleben mit der Metallscheibe 20 verbunden ist.

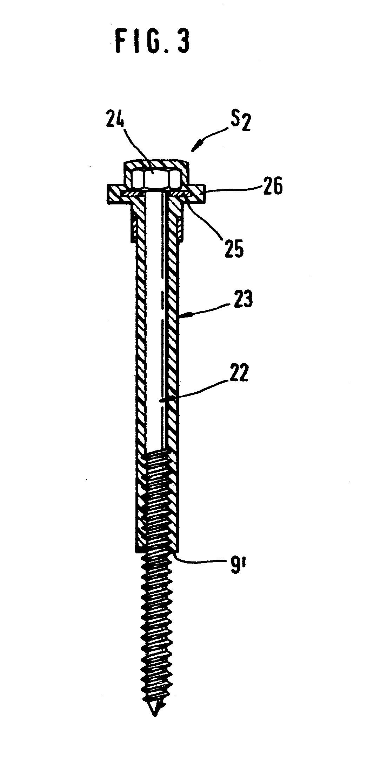

Fig. 3 zeigt eine Schraube $S_2$, die einen Kern 22 und einen Mantel 23 aufweist. Die Schraube $S_2$ unterscheidet sich von

der Schraube S$_1$ dadurch, daß der Kopf 24 des Kernes 22 einen angeformten Flansch nicht aufweist. Dafür ist auf den Kern 22 eine metallische Unterlegscheibe 25 aufgeschoben, die vom Mantel 23 umhüllt ist. Man kann dadurch einen besonders großen, durch eine metallische Einlage verstärkten Flansch schaffen.

Am Beispiel der Schraube S$_2$ ist auch dargestellt, daß bei gleicher Länge des Kernes der Mantel von Schraube zu Schraube verschieden lang ausgebildet werden kann. Die untere Schulter 9' des Mantels 23 liegt wesentlich näher beim Kopf der Schraube als die Schulter 9 bei der Schraube S$_1'$. Die Schraube S$_2$ ist demgemäß für die Befestigung von dünneren wärmeisolierenden Platten geeignet als die Schraube S$_1$. Nicht jeder Schraube muß eine Dichtungsscheibe 19 zugeordnet sein. Auch die Anlage des Flansches 26 an der zu befestigenden Platte kann für eine ausreichende Abdichtung genügen.

In Fig. 4 ist die Befestigung einer wärmeisolierenden Platte 27 dargestellt. Die wärmeisolierende Platte 27 hat ein äußeres Deckblech 28, z.B. ein Aluminiumblech und ein inneres Deckblech 29, das ebenfalls aus Aluminium bestehen kann. Zwischen die beiden Deckbleche 28, 29 ist wärmeisolierendes Material 30 eingeschlossen. Die Platte 27 ist an einer Unterkonstruktion 31 befestigt. Die Unterkonstruktion 31 hat bei der gezeichneten Ausführungsform Z-förmige Profile, auf deren äußeren Flanschen 32 die Platte 27 aufliegt.

Zur Befestigung der Platte 27 dienen Schrauben S$_3$, die im Prinzip gleich ausgebildet sind wie die Schraube S$_1$, jedoch eine geringere Länge haben als diese.

In der Befestigungsstellung ist der Einschraubbereich 8 der Schraube in ein Loch 33 im Flansch 32 eingeschraubt. Beim

Eindrehen der Schraube $S_3$ hat deren Gewinde 7 in das Loch 33 ein Gewinde eingefurcht. Die Einschraubtiefe der Schraube $S_3$ wurde begrenzt durch Anlage der Schulter 9 an der Oberseite des inneren Deckbleches 29, das fest zwischen die Schulter 9 und den Flansch 32 der Tragkonstruktion eingeklemmt ist. Der Mantel 2 wirkt also zugleich als Distanzhülse, der ein zu tiefes Eindrehen der Schraube und damit ein Eindrücken des äußeren Deckbleches 28 verhindert. Die Länge des Mantels 2 muß also auf die Dicke $s_p$ der wärmeisolierenden Platte 27 abgestimmt sein.

Das äußere Deckblech 28 liegt im Bereich des Metallringes 15 an der Schraube $S_3$ an. Der Metallring 25 verhindert das Einschneiden der Randkante des Loches 34 im äußeren Deckblech 28. Ohne den Metallring 15 bestünde die Gefahr, daß die Lochkante den Kunststoff des Mantels 2 durchschneidet und schließlich metallische Berührung mit dem Schraubenkern bekommt.

Die Dichtscheibe 19 wird durch den Flansch 12 des Schraubenkopfes 10 gegen das äußere Deckblech 28 gepreßt, wobei der elastische Belag 21 elastisch zusammengedrückt wird. Hierdurch erhält man eine absolut sichere Abdichtung gegen das Eindringen von Feuchtigkeit durch das Loch 34 in das Innere der wärmeisolierenden Platte 27.

Ansprüche:

1. Schraube für die Befestigung von wärmeisolierenden Bauplatten an einer Unterkonstruktion, mit einem Schraubenschaft und einem Schraubenkopf, gekennzeichnet durch einen Kern (1; 22) aus Metall, insbesondere aus Stahl und einen Mantel (2; 23) aus Kunststoff, wobei sich der Kern (1; 22) über die gesamte Länge der Schraube erstreckt und der Mantel (2; 23) den Schraubenkopf (10) und den Schraubenschaft (4) bis zum Beginn eines vorderen Einschraubbereiches (8) hin bedeckt, der frei von einem Kunststoffüberzug ist.

2. Schraube nach Anspruch 1, dadurch gekennzeichnet, daß im Schaftbereich (4) der Schraube der Manteldurchmesser ($d_M$) des 1,25fache bis 3fache des Schaftdurchmessers beträgt, vorzugsweise das ca. 2fache, wobei die Mindestdicke (s) des Mantels (2; 23) im Schaftbereich ca. 1,5 mm beträgt.

3. Schraube nach einem der vorhergehenden Ansprüche, dadurch gekennzeichnet, daß der Mantel (2; 23) aus thermoplastischem Kunststoff besteht, vorzugsweise aus einem
Polyamid.

4. Schraube nach einem der vorhergehenden Ansprüche, dadurch gekennzeichnet, daß der den Schraubenschaft (4)
umgebende Mantelbereich als Distanzhülse für die Überbrückung der Plattendicke ($s_P$) dient und zu diesem Zweck
an seinem vorderen Ende eine Anlageschulter (9; 9') für
die Anlage an der Unterkonstruktion (31) bildet.

5. Schraube nach einem der vorhergehenden Ansprüche, dadurch gekennzeichnet, daß die Länge ($l_E$) des Einschraubbereiches (8) gleich der Länge ($l_{Sp}$) einer Schraubenspitze
zuzüglich einem Schaftabschnitt ist, dessen Länge ($l_G$)
mindestens gleich dem Gewindeaußendurchmesser ist.

6. Schraube nach einem der vorhergehenden Ansprüche, dadurch gekennzeichnet, daß der Mantel (2; 23) unterhalb
des Schraubenkopfes (10) von einem Armierungsring (15) umgeben ist, der aus hartem Material, vorzugsweise aus Metallblech, besteht.

7. Schraube nach Anspruch 6, dadurch gekennzeichnet, daß
der Armierungsring (15) wesentlich kürzer ist als der ummantelte Schaftbereich (4), z.B. eine Länge im Bereich von
2 mm bis 15 mm aufweist, vorzugsweise von ca. 5 mm.

8. Schraube nach einem der Ansprüche 6 und 7, dadurch gekennzeichnet, daß der Armierungsring (15) auf den Mantel
(2; 23) aufgeklemmt ist, wobei der Armierungsring (15),vorzugsweise einen Trennschlitz (16) aufweist.

9. Schraube nach Anspruch 8, dadurch gekennzeichnet, daß
der Trennschlitz (16) zur Bildung einer Verzahnung (17,18)
zwischen den aneinanderstoßenden Ringenden gekrümmt ist.

- 3 -

10.  Schraube nach einem der vorhergehenden Ansprüche, dadurch gekennzeichnet, daß der Kern (1; 22) einen Kopf (5; 24) aufweist.

11.  Schraube nach Anspruch 10, dadurch gekennzeichnet, daß unterhalb des Kopfes (24) des Kernes (22) eine vom Mantel (23) umhüllte Unterlegscheibe (25) aus Metall angeordnet ist.

12.  Schraube nach einem der vorhergehenden Ansprüche, dadurch gekennzeichnet, daß unterhalb des Schraubenkopfes (10) eine Dichtungsscheibe (19) angeordnet ist.

0176968

FIG.1

FIG.2

0176968

# FIG. 3

FIG. 4

# EUROPÄISCHER RECHERCHENBERICHT

**0176968**
Nummer der Anmeldung

EP 85 11 2231

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | DE-B-1 500 794 (ILLINOIS TOOL WORKS)<br>* Figur 1 * | 1,3 | F 16 B 25/00 |
| Y | DE-A-2 400 109 (LIOU et al.)<br>* Figur 3 * | 1 | |
| Y | DE-U-1 920 589 (KACHIE ABRHAM)<br>* Figur 2 * | 1,3 | |
| Y | DE-U-1 923 175 (GEBR. UHL)<br>* Figur 4 * | 1,3 | |
| Y | DE-U-7 807 519 (HILTI)<br>* Figur 2 * | 1,3 | |
| Y | AT-B- 353 062 (SFS STADLER)<br>* Figur 4 * | 1,3 | |
| A | | 12 | |
| Y | US-A-3 078 334 (FORMAN)<br>* Figur 3 * | 1,3 | |
| Y | US-A-3 911 781 (BAPPERT)<br>* Figur 3 * | 1,3 | |

**RECHERCHIERTE SACHGEBIETE (Int Cl 4)**

F 16 B 25/00
E 04 F 13/08
E 04 B 1/00

Der vorliegende Recherchenbericht wurde für alle Patentansprüche erstellt.

| Recherchenort | Abschlußdatum der Recherche | Prüfer |
|---|---|---|
| BERLIN | 04-12-1985 | ZAPP E |

EPA Form 1503 03 82